# EUROPEAN PATENT SPECIFICATION

(11) **EP 4 359 693 B1**
(45) Date of publication and mention of the grant of the patent: **24.12.2025**
(21) Application number: 22726545.1
(22) Date of filing: 13.05.2022
(51) Int. Cl.: F16L 1/24, H02G 1/10

(54) **SYSTEMS AND METHODS FOR CABLE INSTALLATION**
SYSTEME UND VERFAHREN ZUR KABELINSTALLATION
SYSTÈMES ET PROCÉDÉS POUR INSTALLATION DE CÂBLE

(30) Priority: 23.06.2021 NO 20210805
(43) Date of publication of application: 01.05.2024
(73) Proprietor: MHWirth AS, 4604 Kristiansand S (NO)
(72) Inventor: LIMA, Hélder, 4639 Kristiansand (NO); HEGGLAND, Tor Martin, 4639 Kristiansand (NO); AANESLAND, Are, 4621 Kristiansand (NO); SHEPPARD, Espen, 4633 KRISTIANSAND (NO); ALBREKTSEN, Arne, 4631 Kristiansand (NO); NILSEN, Nicolai, 4639 Kristiansand (NO)
(74) Representative: Zacco Norway AS
(86) International application number: PCT/NO2022/050106
(87) International publication number: WO 2022/271030

(56) References cited:
- EP-A1- 3 306 157
- WO-A1-2019/104366
- US-A1- 2003 029 978
- US-A1- 2009 036 008

## Description

The present disclosure relates to systems and methods for installing a cable, and particularly for preparing a cable for deployment offshore.

### BACKGROUND

When installing cables offshore, buoyancy aids, in the form of generally cylindrical modules are sometimes required on portions or the full length of a cable. This may be needed to obtain a desired configuration and behavior of the cable when in the installed state. Examples of such buoyancy aids are described in US 6, 030,145 and EP 3 306 157, for example, where EP 3 306 157 describes a buoyancy element that comprises a plurality of, and preferably two, buoyancy modules interconnected to form a buoyancy element around an electrical cable or a pipeline, wherein a first buoyancy module is provided with at least one first fastening element and a second buoyancy module is provided with at least one second fastening element, and wherein the first fastening element comprises a snap element that snaps onto the second fastening element when the first buoyancy module is secured to the second buoyancy module. According to one aspect, a single embodiment of the buoyancy module comprises both the first fastening element and the second fastening element, oriented such that two identical buoyancy modules may be clamped together, whereby mutually cooperating first and second fastening elements of the respective modules align in locking engagement. This aspect of the invention reduces production costs, as only a single type of module needs to be manufactured. Another example is described in WO2019/104366A1, which describes a buoyancy module for installing on a member, the member having an axis and a clamp, and the buoyancy module comprising; a first module piece comprising a elongate recess configured to receive the member along its axis, and a secondary recess configured to receive the clamp; a locking piece configured to be inserted into the secondary recess to prevent the member from withdrawing from the elongate recess, and locking means to hold the locking piece in place. Another example is described in US2009/036008 A1, which describes a streamlined annular buoy for marine pipelines that includes a first annular buoy half comprising syntactic foam, where the first buoy half includes a substantially planar exterior first mating surface that includes an axial first channel formed therein and a first domed exterior surface radial to the axial first channel. Buoy also includes a second annular buoy half comprising syntactic foam, where the second buoy half includes a substantially planar exterior second mating surface that includes an axial second channel formed therein and a second domed exterior surface radial to the axial second channel. A fastener secures the first and second annular buoy halves together around a pipe that passes through a pipe channel formed by the axial first and second channels, such that the exterior first and second mating surfaces are face-to-face. Another example is described in US2003/029978A1, which describes a buoyant clamp assembly and method for clamping an elongate member to a support member. The buoyant clamp assembly includes a flexible strap having first and second ends. Affixed to the exterior of the flexible strap are wear blocks. A highly frictional layer is attached to the interior of the flexible strap to increase friction between the clamping assembly and the elongate or support member. The flexible strap extends substantially around the elongate and support members. The first and second ends are adapted to be coupled to each other via a loop member. The clamp assembly also includes a tensioner assembly having first and second tensioner bars spaced parallel to one another. Capture bolts affixed to the tensioner assembly prevent the first and second tensioner bars from separating. Each of the first and second tensioner bars includes a bullnose face and the bullnose faces are in opposing relationship to one another. The tensioner assembly also includes adjusting members for adjusting the spacing between the first and second tensioner bars. The first end of the flexible strap extends around the support member, through the gap between the tensioner bars, through the loop member and doubles back on itself through the gap between the tensioner bars. The doubled-back portion of the flexible strap is positioned between the first portion of the flexible strap passing through the gap and the first tensioner bar. A highly frictional layer is attached to the flexible strap in the area where the flexible strap doubles back on itself so that the highly frictional layer is between the flexible strap layers. The holding ability of the clamp assembly is attributable to the tensioner assembly, the doubling back of the flexible strap and the friction multiplier.As reeling a cable with such buoyancy aids already in place may require considerable space and large reels, the installation of buoyancy aids is often carried out on a construction or installation vessel offshore, where buoyancy aids are clamped onto the cable manually after the cable is reeled off a storage reel but before deployment (overboarding) of the cable. Such operations are time consuming, increasing the cost of the installation operation, and represent health-and-safety (HSE) risks since manual intervention is required in a high-risk area such as the deck of an installation vessel.

With activity in offshore areas projected to continue to increase in the future, for example with the further development of offshore renewable energy technology, there is a need for improved solutions for cable installation for these and other applications. The present disclosure has the objective to provide such improved systems and methods, or at least alternatives to known solutions.

### SUMMARY

According to a first aspect of the invention we provide an apparatus for mounting a buoyancy aid on an elongate line such as a cable or pipeline, the buoyancy aid having a first portion and a second portion which are separable to enable the buoyancy aid to be mounted on the elongate line, the apparatus comprising a movable frame on which is mounted a support cradle and an opening arrangement, the opening arrangement which has a gripper which is operable to grip whichever of the first or second portions of a buoyancy aid placed on the support cradle is uppermost, the apparatus further comprising a drive system which is operable to move the frame between a loading position in which the buoyancy aid may be placed on the support cradle and an installation position, and also to move the support cradle or opening arrangement relative to the frame in such a way that when the gripper is gripping whichever of the first or second portions of the buoyancy aid placed on the support cradle is uppermost, the first portion of the buoyancy aid separates from the second portion.

Advantageously, the opening arrangement is movable relative to the frame, and the drive system is operable to lift the opening arrangement relative to the support cradle so that when the gripper is gripping whichever of the first or second portions of the buoyancy aid placed on the support cradle is uppermost, this uppermost portion of the buoyancy aid is lifted off the other portion.

The apparatus may further include a tensioner which is operable to actuate a locking device to secure the first portion of the buoyancy aid placed on the support cradle to the second portion, so that the first and second portions can no longer be separated.

The apparatus may include a plurality of tensioners which are operable to simultaneously actuate a plurality of locking devices to secure the first portion of the buoyancy aid placed on the support cradle to the second portion, so that the first and second portions can no longer be separated.

The or each tensioner may be operable to actuate the locking device to release the first portion of the buoyancy placed on the support cradle from the second portion so that the first portion can be separated from the second portion by the opening arrangement.

The or each tensioner may comprise a torque tool.

The apparatus may further comprise a lifting mechanism which is operable to move between a lowered position and a lifted position in which it lifts the buoyancy aid supported by the support cradle off the support cradle.

The or each tensioner may be mounted on the lifting mechanism.

Advantageously the apparatus further comprises a buoyancy aid storage and delivery arrangement which includes a support structure which is capable of supporting at least one buoyancy aid, and a conveyor which, when the frame is in the loading position, is operable to move the buoyancy aid from the support structure onto the support cradle.

Advantageously, the support structure is configured to support a plurality of buoyancy aids, with one of the said buoyancy aids being in a delivery position, and the conveyor is operable, when the frame is in the loading position, to move the buoyancy aid from the delivery position onto the support cradle, and to move another buoyancy into the delivery position. In this case, the support structure may be configured to hold the buoyancy aids in a row in an end-to-end arrangement.

Moreover, the support structure may be configured to support first and second rows of buoyancy aids, with one buoyancy aid in each row being in a delivery position, the drive system being operable to move the frame between a first and second loading position, and the buoyancy aid storage and delivery arrangement including first and second conveyors the first one of which is operable, when the frame is in the first loading position, to move a buoyancy aid in the first row from the delivery position onto the support cradle, and to move another buoyancy aid from the first row into the delivery position, and the second one of which is operable, when the frame is in the second loading position, to move a buoyancy aid in the second row from the delivery position onto the support cradle, and to move another buoyancy aid in the second row into the delivery position.

According to a second aspect of the invention we provide a method of installing a buoyancy aid on an elongate line such as a cable or pipeline using an apparatus according to the first aspect of the invention, the buoyancy aid having a first portion and a second portion which are separable to enable the buoyancy aid to be mounted on the elongate line, wherein the method includes the steps of:
a) with the frame in the loading position, loading the buoyancy aid onto the support cradle,
b) operating the gripper to grip whichever of the first or second portions of a buoyancy aid placed on the support cradle is uppermost,
c) operating the drive system to move either the support cradle or opening arrangement relative to the frame, and to separate the first portion and second portion of the buoyancy aid,
d) operating the drive system to move the frame to the installation position,
e) operating the drive system to move the support cradle or opening arrangement relative to the frame to bring the first portion of the buoyancy aid back into engagement with the second portion.

Advantageously, step c comprises moving the opening arrangement relative to the frame to lift the opening arrangement relative to the support cradle so that whichever of the first or second portions of a buoyancy aid placed on the support cradle is uppermost is lifted off whichever of the first or second portions of the buoyancy aid is lowermost.

Step b may comprise, prior to operating the gripper, operating the drive system to bring the opening arrangement towards whichever of the first or second portions of the buoyancy aid placed on the support cradle is uppermost.

Advantageously, the elongate line is positioned adjacent the apparatus such that when the frame is moved to the installation position, a portion of the elongate line is located between the first and second portions of the buoyancy aid, and when the gripping arrangement is moved to bring the first portion of the buoyancy aid back into full engagement with the second portion, said portion of the elongate line is trapped between the first and second portions of the buoyancy aid.

The elongate line may extend adjacent the apparatus generally parallel to the surface on which the frame is supported.

The apparatus may further comprise a lifting mechanism which is operable to move between a lowered position and a lifted position in which it lifts the buoyancy aid supported by the support cradle off the support cradle, and step d may further include, after operating the drive system to move the frame to the installation position, moving the lifting mechanism from the lowered position to the lifted position to lift whichever of the first or second portions of the buoyancy aid placed on the support cradle is lowermost off the support cradle towards the portion of the elongate line located between the first and second portions of the buoyancy aid.

The apparatus may further comprise a tensioner which is operable to actuate a fastener to secure the first portion of a buoyancy aid mounted in the support cradle to the second portion, so that the first and second portions can no longer be separated, and the method may include the step of, after carrying out step e:
f) operating the tensioner to actuate a fastener on the buoyancy aid to secure the first portion of the buoyancy aid to the second portion.

The apparatus may include a plurality of tensioners which are operable to simultaneously actuate a plurality of fasteners to secure the first portion of the buoyancy aid mounted in the support cradle to the second portion, so that the first and second portions can no longer be separated, in which case step f may include operating each of the tensioners to actuate one fastener on the buoyancy aid to secure the first portion of the buoyancy aid to the second portion.

The method may further include the step of, after carrying out step f,
g) returning the lifting mechanism to the lowered position.

The method may further include the step of, either after carrying out step f or step g,;
h) operating the drive system to return the frame to the loading position.

Advantageously the apparatus further comprises a buoyancy aid storage and delivery arrangement which includes a support structure which is capable of supporting at least one buoyancy aid, and a conveyor which, when the frame is in the loading position, is operable to move the buoyancy aid from the support structure onto the support cradle, and step a of the method may include operating the conveyor to move a buoyancy aid onto the support cradle.

Advantageously, the support structure is configured to support a plurality of buoyancy aids, with one of the said buoyancy aids being in a delivery position, and the method may include the step of, after carrying out step a, operating the conveyor to move another buoyancy into the delivery position.

The support structure may be configured to support a first and second row of buoyancy aids, with one buoyancy aid in each row being in a delivery position, the drive system being operable to move the frame between a first and second loading position, and the buoyancy aid storage and delivery arrangement including first and second conveyors the first one of which is operable, when the frame is in the first loading position, to move a buoyancy aid in the first row from the delivery position onto the support cradle, and to move another buoyancy aid from the first row into the delivery position, and the second one of which is operable, when the frame is in the second loading position, to move a buoyancy aid from the second row from the delivery position onto the support cradle, and to move another buoyancy aid from the second row into the delivery position, wherein step a may comprise, with the frame in the first loading position, operating the first conveyor to move a buoyancy aid from the first row from the delivery position onto the support cradle.

The method may comprise, after carrying out step f or g, operating the drive system to move the frame to the second loading position. The second conveyor may then be operated to move a buoyancy aid from the second row delivery position onto the support cradle.

According to a third aspect of the invention we provide a buoyancy aid comprising a shell which is divided into two separable portions, and a shell fastener arrangement for locking the two portions of the shell together, the shell fastener arrangement including two flexible straps each of which has a first and second connector, one connector being located at each of its ends, a first one of the straps extending around at least a part of a first one of the shell portions and a second one of the straps extending around at least a part of a second one of the shell portions, the first connector of the first strap being connected to the first connector of the second strap, and the second connector of the first strap being connected to the second connector of the second strap so that the first and second straps form a continuous loop around the two shell portion to clamp the two shell portions together.

Advantageously, the shell fastener arrangement includes two pairs of flexible straps each one of which has a first and second connector, one connector being located at each of its ends, a first one of each of the pairs of straps extending around at least a part of a first one of the shell portions and a second one of each of the pairs of straps extending around at least a part of a second one of the shell portions, the first connector of each first strap being connected to the first connector of each second strap, and the second connector of each first strap being connected to the second connector of each second strap so that the first and second straps of each pair form a continuous loop around the two shell portion and the two pairs of straps clamp the two shell portions together. In this case a first pair of the two pairs of straps is positioned adjacent to a first end of the shell, and a second pair of the two pairs of straps is positioned adjacent to a second, opposite, end of the shell.

The shell may be generally cylindrical, and configured to be mounted on an elongate line, such as a cable or pipeline, so that the elongate line lies substantially along the axis of the cylinder formed by the shell.

The shell may be divided into two substantially identical portions.

Each portion of the shell may be substantially hollow and completely enclose a sealed volume.

Each connector on the first strap may comprise a male fastener, such as a threaded bolt, and each connector on the second strap may comprise a female connector part, such as a correspondingly threaded bolt hole, into which the male fastener may be inserted to secure the first strap to the second strap.

The straps may be made from aramid fibres, such as Kevlar^{®} fibres.

The buoyancy aid may comprise a two-part clamp, one part of the clamp being mounted in each portion of the shell, which is configured such that when the two portions of the shell are clamped together using the shell fastener arrangement around a part of an elongate line, the two clamp parts are brought into a clamping configuration in which they clamp the buoyancy aid onto the elongate line so as to substantially prevent the buoyancy aid from moving along the elongate line.

The clamp may be made predominantly from metal.

The clamp may be provided with a clamp fastener structure which is configured to secure one part of the clamp to the other.

### BRIEF DESCRIPTION OF THE DRAWINGS

These and other characteristics will become clear from the following description of illustrative embodiments, given as non-restrictive examples, with reference to the attached drawings, in which
FIGURE 1 is a perspective side view of a buoyancy aid according to the third aspect of the invention, and suitable for use in the apparatus and method of the first and second aspects of the invention,
FIGURE 2 is a perspective end view of the buoyancy aid illustrated in Figure 1,
FIGURE 3 is a perspective view of the buoyancy aid illustrated in Figure 1 with the top shell portion removed to show the clamp,
FIGURE 4 is a perspective view of an apparatus for installing a buoyancy aid on an elongate line according to the first aspect of the invention, with the frame in the loading position,
FIGURE 5 is an alternative perspective view of the apparatus illustrated in Figure 4, with the frame in the installation position and a buoyancy aid mounted on an elongate line,
FIGURE 6 is an alternative perspective view of the apparatus illustrated in Figure 5, and
FIGURE 7 is an illustration of the apparatus illustrated in Figure 4 installed for use on a cable laying vessel.

### DETAILED DESCRIPTION

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

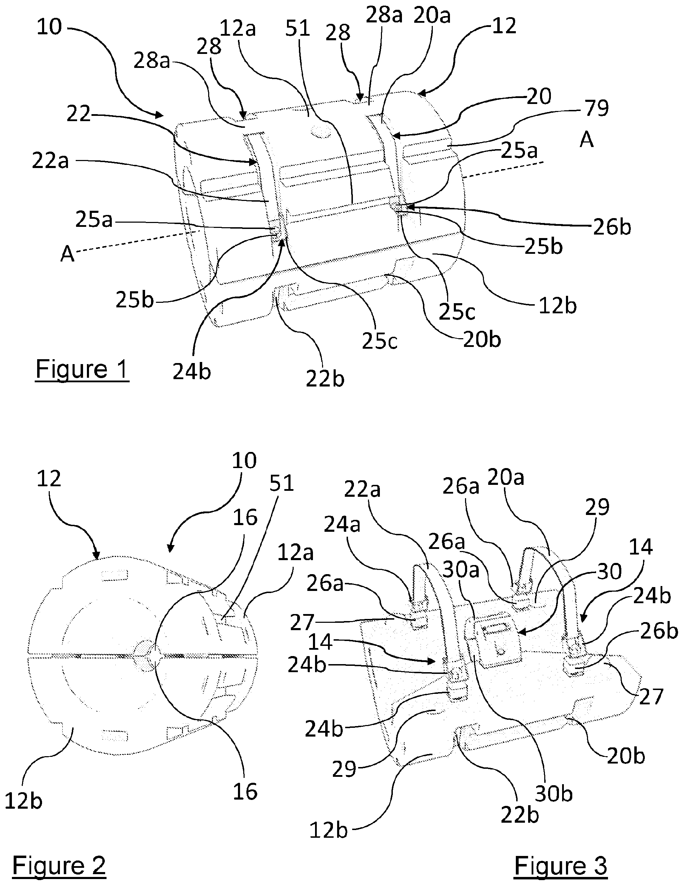

Figures 1 - 3 show a buoyancy aid 10 comprising a shell 12 which is divided into two separable portions 12a, 12b, and a shell fastener arrangement 14 for locking the two portions of the shell 12a, 12b together. In this embodiment, the shell 12 is generally cylindrical, and is configured to be mounted on an elongate line, such as a cable or pipeline, so that the elongate line lies substantially along the axis A of the cylinder formed by the shell 12. Whilst not necessarily the case, in this embodiment, the shell 12 is divided into two substantially identical, semi-cylindrical portions 12a, 12b, which each have a pair of generally semi-circular end faces, a generally rectangular, flat centre face, and a curved outer face.

The elongate line is accommodated by the provision of a recess 16 in each portion 12a, 12b of the shell 12, which extends generally centrally along the centre face from one end face to the other. When the two portions 12a, 12b are placed with their centre faces together to form a cylinder, the recesses 16 are aligned to provide a axial passage from one end of the cylinder to the other, along which, when the buoyancy aid 10 is mounted on an elongate line, a portion of the elongate line extends.

Although the recesses 16 could have a uniform cross-section from one end face of the shell portion 12a, 12b to the other, and thus form a cylindrical passage, in this embodiment, this is not the case, and the diameter of the recesses 16 is at a minimum at a central portion of the shell 12 generally equidistant between the end faces, and increases, generally linearly, to the end faces.

Moreover, whilst the centre faces of the shell portions 12a, 12b could be completely flat, in this embodiment, protuberances and correspondingly sized and shaped alignment recesses are provided in the centre faces of the shell portions 12a, 12b. This are configured to mate - one protuberance being lodged in each alignment recess - when the two shell portions 12a, 12b are brought together with their end faces aligned to form the generally cylindrical shell 12. As such, a protuberance 27 is provided in each of two diagonally opposite corners of the centre faces, and an alignment recess 29 in each of the other two diagonally opposite corners.

The shell 12 is advantageously made from a polymer. In order to provide the cable or pipeline with buoyancy in seawater, the two portions 12a, 12b of the shell 12 are each substantially hollow and completely enclose a sealed volume of air. Other known methods of providing the shell with the required buoyancy could equally be employed, however. The two portions 12a, 12b of the shell 12 could, for example, be made from or filled with a closed pore foam, or comprise hollow plastic or glass balls molded into the material of the shell 12.

The buoyancy aid further comprises a shell fastener arrangement which includes two pairs of flexible straps 20, 22. Each pair of straps 20, 22 has a first and second connector 24a, 24b, 26a, 26b, the connectors 24a, 24b, 26a, 26b connecting the ends of the straps 20a, 20b, 22a, 22b in each pair together so that they form a loop. A first one of the straps 20a, 22a of each pair 20, 22 extends around the curved outer surface of the first shell portion 12a and a second one of the straps 20b, 22b of each pair 20, 22 extends around the curved outer surface of the second shell portion 12b. The straps 20, 22 are advantageously made from aramid fibers, such as Kevlar^{®}.

In order to lock the two shell portions 12a, 12b together, for each pair of straps 20, 22, the first connector 24a, 26a connects a first end of the first strap 20a, 22a to a first end of the second strap 20b, 22b, and the second connector 24b, 26b connects a second end of the first strap 20a, 22a to a second end of the second strap 20b, 22b, so that each pair of straps 20, 22 form a continuous loop around curved surfaces of the two shell portions 12a, 12b to clamp the two shell portions together.

In this embodiment, the two pairs of straps 20, 22 are parallel and spaced relative to one another, and arranged such that each is adjacent to one of the end faces of the shell 12. In order to maintain the straps 20, 22 in this position, the curved surface of each portion 12a, 12b of the shell 12 may be provided with a strap retainer formation 28 through which the respective strap portion 20a, 20b, 22a, 22b is threaded. In this embodiment, includes a circumferential recess in which the strap portion 20a, 20b, 22a, 22 is lodged, with a narrow bridge portion 28a which connects opposite edges of the recess under which the strap portion 20a, 20b, 22a, 22b extends.

In this embodiment, each connector 24a, 24b, 26a, 26b comprises a male connector part and a female connector part. In this embodiment, the male fastener comprises a threaded bolt 25a and the female part a correspondingly threaded nut 25b, into which the bolt 25a may be inserted to secure the two connectors together. A keeper 25c is mounted on each end of the strap portions 20a, 22a, 20b, 22b and provides a generally flat plate part which lies generally perpendicular to the length of the strap portion 20a, 22a, 20b, 22b. An aperture is provided in the plate part, and when one end of the first strap portion 20a, 22a is connected to one end of the second strap portion 20b, 22b, the shank of the bolt 25a extends through the apertures provided in both keepers 25c, with the head of the bolt 25a engaging with the plate part of one of the keepers 25c. The nut 25b may then be threaded onto the free end of the shank of the bolt 25a until it engages with the plate part of the other keeper 25c. Both keepers 25c are then trapped between the nut 25b and the head of the bolt 25a, so that the first and second strap portions 20 a, 22a, 20b, 22b are fastened together.

In this embodiment, the head of each of the bolt 25a same shape and size as the nut 25b. Thus the same torque tool can be used to rotate the bolt 25a about its longitudinal axis, and the nut 25b around shank of the bolt 25a.

In this embodiment, the buoyancy aid 10 further comprises a two-part clamp 30, a first part 30a of the clamp 30 being mounted in the first portion 12a of the shell 12, and a second part 30b of the clamp being mounted in the second portion 12b of the shell 12. The clamp 30 is configured such that when the two portions 12a, 12b of the shell 12 are clamped together using the shell fastener arrangement 14 around a part of an elongate line, the two clamp parts 30a, 30b are brought into a clamping configuration in which they clamp onto the elongate line, frictional forces between the clamp 30 and the elongate line preventing the clamp 30 from moving relative to the elongate line.

The clamp 30 may be lodged in appropriately shaped recesses in the shell 12, and retained in the shell 12 during installation by means of an interference fit. Alternatively, the clamp 30 may be glued to the shell 12 or retained by appropriate retaining features. In all embodiments, however, the buoyancy aid 10 is configured such that, in use, the shell 12 breaks free of the clamp 30, so that the shell 12 can rotate relative to the clamp 30, but engagement of the shell 12 with the clam 30 substantially prevents the buoyancy aid 10 from moving along the elongate line. This is intended to reduce torsional stresses on the clamp 30 and elongate line as the shell 12 is buffetted by waves, and where an adhesive or retaining features are used, is achieved by the use of an appropriately weak adhesive or retaining features which are weak enough to break when the torsional forces acting on the shell 12 reach a predetermined threshold.

Each part 30a, 30b of the clamp 30 is mounted in the longitudinal recess 16 in the centre face of each portion 12a, 12b of the shell 12 generally centrally between each pair of opposite end faces, so that an elongate line extending along the axial passage formed by the longitudinal recesses 16, passes through the centre of the clamp 30.

The clamp 30 may be made predominantly from metal. In order to increase the frictional forces between the clamp 30 and a line around which the clamp 30 is clamped, the surfaces which engage with the line may be coated or covered in a high friction material such as rubber. Alternatively, surface markings such as striations may be provided on these surfaces, or an alternative surface treatment applied in order to increase the coefficient of friction of the clamp 30 relative to the line.

Whilst the clamping force of the straps 20, 22 on the shell 12 might provide enough force to urge the two parts 30a, 30b of the clamp 30 together to clamp onto the elongate line and generate sufficient frictional forces to inhibit or prevent movement of the buoyancy aid 10 along the line, the clamp 30 may be provided with its own separate, clamp fastener structure which is configured to secure one part of the clamp 30a to the other 30b. In this embodiment, the clamp fastener structure comprises two threaded bolts which extend through an aperture provided in the first part 30a of the clamp 30 into a correspondingly threaded nut in the second part 30b of the clamp 30.

Although not essential, in this embodiment, each part 30a, 30b of the clamp 30 is formed from two separate parts which are connected by means of a flexible strap, which again may be made from aramid fibres such as Kevlar^{®}. Each part 30a, 30b could equally be made as a single piece.

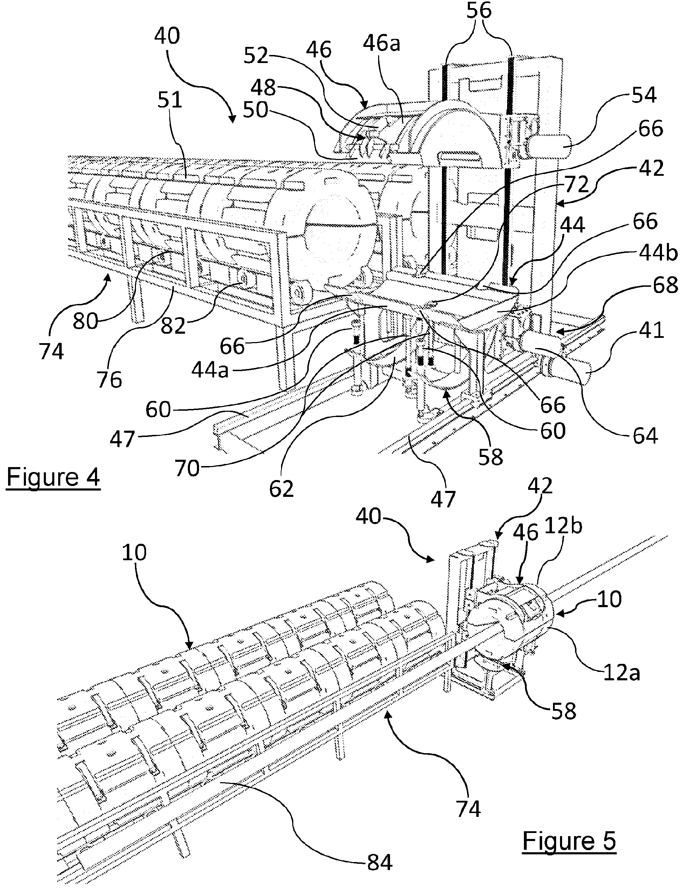

The buoyancy aid 10 described above may be mounted on an elongate line such as a cable or pipe using the apparatus 40 illustrated in Figures 4, 5 & 6.

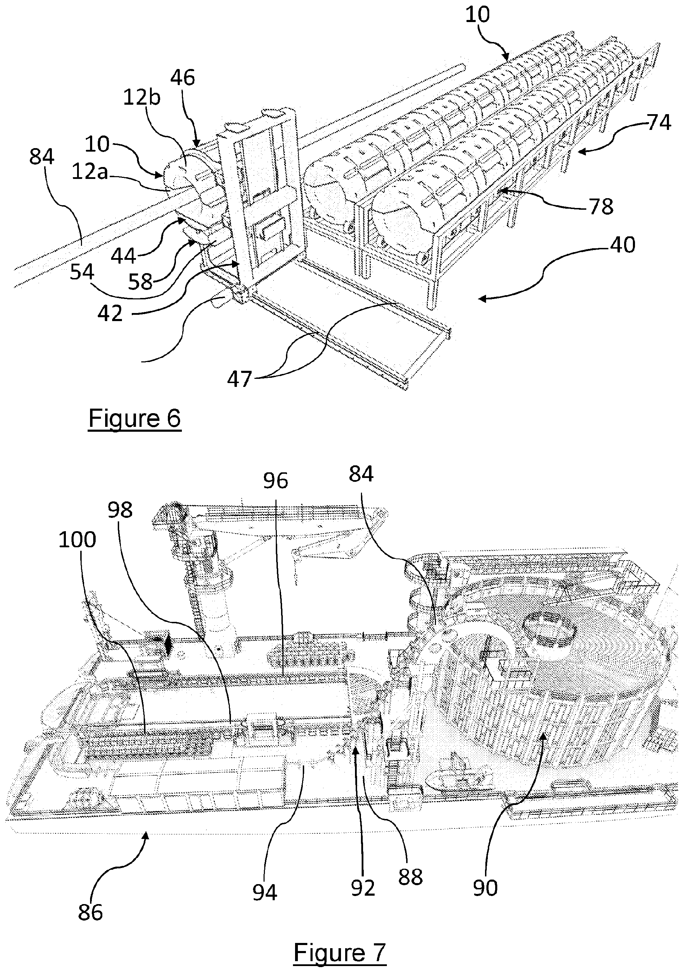

The apparatus 40 comprises a movable frame 42 on which is mounted a support cradle 44, and an opening arrangement 46. The apparatus is further provided with a drive system which is operable to move the frame 42 between a loading position in which a buoyancy aid 10 may be placed on the support cradle 44 and an installation position. In this embodiment the frame 42 is mounted on a pair of rails 47, and the drive system includes a frame drive apparatus 41 which is operable to drive the frame 42 along the rails 47 in a forward direction (from the loading position to the installation position) and in a backward direction (from the installation position back to the loading position). The frame drive apparatus 41 may comprise an electric motor, a hydraulically or pneumatically operated actuator, or any other suitable drive apparatus. The frame 42 is illustrated in the loading position in Figure 4, and in the installation position in Figures 5 & 6.

As best illustrated in Figure 4, the support cradle 44 comprises a curved base 44a which has a radius of curvature which is similar or identical to that of the curved outer face of the shell 12 of the buoyancy aid described above. A buoyancy aid 10 may therefore be placed on the support cradle 44 so that the curved outer face of a lowermost one of the portions 12a, 12b of the shell 12 engages with the curved base 44a of the support cradle 44 and the centre faces and cylinder axis of the shell 12 are generally horizontal. In this embodiment, the first shell portion 12a is the lowermost one of the portions, and thus engages with the curved base 44a of the support cradle 44.

The support cradle 44 further comprises an end plate 44b which extends in a generally vertical plane across one end of the curved base 44a to act as a stop limiting sliding movement of a buoyancy aid 10 placed in the support cradle 44 as described above, relative to the curved base 44a.

The opening arrangement 46 comprises a curved body 46a which has a radius of curvature which is similar or identical to that of the curved outer face of the shell 12 of the buoyancy aid, on which is mounted a gripper 48. The curved body 46a has two mutually parallel and generally horizontal longitudinal edges, and two mutually parallel curved tranverse edges. The gripper 48 is operable to grip an upper one of the portions 12a, 12b of the shell 12 of a buoyancy aid 10 placed on the support cradle 44 as described above, with the centre faces of the two portions 12a, 12b of the shell 12 and the cylinder axis lying generally horizontally. In this embodiment, the second shell portion 12b is the uppermost portion, and thus is gripped by the gripper 48.

In this embodiment, the gripper 48 comprises a pair of levers 50 which are each pivotally mounted on the body 46a, one at or adjacent to each of the longitudinal edges of the body 47. Each lever 50 has a latch part which extends radially inwardly relative to the body 46a and which, through pivotal movement of the lever 50 relative to the body 46a, can be brought into and out of engagement with a corresponding keeper formation 51 provided on the buoyancy aid 10. The keeper formations could be longitudinal grooves or ridges provided on the curved outer face of each shell portion 12a, 12b. In this embodiment, the keeper formations are longitudinal grooves.

In this embodiment, each lever 50 comprises a metal plate with two mutually perpendicular parts so that it has an L-shaped cross-section. An edge of a first one of the parts is pivotally connected to the body 46a so that the lever pivots about an axis which is generally parallel to the joint between the two parts. The second part is therefore the latch part and engages with the keeper formation on the buoyancy aid 10.

The gripper 48 also comprises an actuator assembly for driving this pivotal movement of the lever. In this example, the actuator assembly comprises a pair of hydraulically or pneumatically operated piston and cylinders 52 - one per lever 50. It will be appreciated that this need not be the case, and any appropriate actuator, including an electric motor, could equally be used. It should also be appreciated that the gripper 48 could comprise only one such lever arrangement.

It will be appreciated, however, that the lever 50 need not be exactly of this configuration, and any suitably shaped part which can be pivoted into engagement the keeper formations could be used. Similarly, whilst in this embodiment, a pivotal level is used to engage with the keeper formations, this need not be the case. For example, a sliding catch with an actuator which causes the catch to move linearly into and out of engagement with the keeper formations could equally be used.

The drive system also comprises an opener drive apparatus 54 which is operable to move the opening arrangement 46 relative to the support cradle 44. In this embodiment, the body 46a of the opening arrangement 46 is mounted on a pair of mutually parallel and generally vertical tracks 56, and the opener drive apparatus 54 is operable to move the body 46a vertically, ie. to raise or lower the body 46a, by moving the body 46a along these tracks 56.

The opener drive apparatus 54 may be operated to move the body 46a of the opening arrangement 46 towards the support cradle 44 so that it comes into engagement with the uppermost shell portion (in this embodiment the second shell portion 12b) of a buoyancy aid 10 supported in the support cradle. Moreover, when the gripper 48 is gripping the second shell portion 12b of a buoyancy aid placed on the support cradle, the opener drive apparatus 54 may be operated to move the opening arrangement 46 away from the support cradle 44 so that it separates the second shell portion 12b from the first shell portion 12a.

In this embodiment, the opener drive apparatus 54 comprises an electric motor, but it will be appreciated that any suitable drive mechanism could be used, including a hydraulically or pneumatically operated motor.

In this embodiment, the body 46a of the opening arrangement 46 is also provided with four sockets (not visible in the figures) and the opening arrangement 46 is driven by the opener drive apparatus 54 into engagement with the uppermost shell portion (in this embodiment, the second shell portion 12b), each socket engages with either the head of the bolt 25a or the nut 25b of one of the connectors 24a, 24b, 26a, 26b. It also may be provided with further sockets which engage with the fastening arrangement associated with the clamp 30.

The apparatus 40 further includes a tensioner assembly 58 which is operable to actuate a locking device to secure the first shell portion 12a of a buoyancy aid 10 placed on the support cradle 44 to the second shell portion 12b, so that the first and second shell portions 12a, 12b cannot be separated.

In this embodiment, the apparatus 40 is configured to receive a buoyancy aid 10 with both shell portions 12a, 12b locked together. As such, the tensioner assembly 58 can also be operated to actuate the locking device to release the first shell portion 12a of a buoyancy aid 10 placed on the support cradle 44 from the second shell portion 12b so that the first shell portion 12a can be separated from the second shell portion 12b.

Where the two portions 12a, 12b of the shell 12 of the buoyancy aid 10 are secured together using a plurality of connectors, the tensioner assembly 58 is advantageously configured to include a separate tool for each connector, the tools being operable to connect or disconnect the connectors simultaneously.

In order to be used in relation to the kind of buoyancy element 10 described above and shown in Figures 1 - 3, in this embodiment, the tensioner assembly 58 comprises four machine operated torque tools 60, each of which is operable to engage with either the head of the threaded bolt 25a or the nut 25b of each connector 24a, 24b, 26a, 26b, and to rotate the bolt 25a about its longitudinal axis, or the nut 25b about the shank of the bolt 25a in either a clockwise or anti-clockwise direction.

Whether the torque tool 60 engages with the head of the threaded bolt 25a or the nut 25b depends on the orientation of the shell 12 in the support cradle 44. If the buoyancy aid 10 were oriented as illustrated in Figure 1, with the second shell portion 12b resting in the support cradle, and the first shell portion 12a engaging with the opening arrangement 46, the torque tools 60 engage with the head of each of the threaded bolts 25a, and rotate the bolt 25a about its longitudinal axis, whilst the corresponding nut 25b is prevented from rotating by means of its engagement with one of the sockets in the opening arrangement 46. If the buoyancy aid 10 is the other way up (as illustrated in Figure 5), the reverse is true - the torque tools 60 engage with the nuts 25b and rotate the nut about the shank of the bolt 25a, whilst the bolt 25a is prevented from rotating by the engagement of its head with one of the sockets.

It will therefore be appreciated that the exact orientation of the buoyancy aid is not significant, and the torque tools 60 can be operated to disconnect and connect the connectors 24a, 24b, 26a, 26b irrespective of whether the first shell portion 12a is below the second shell portion 12b, or vice versa.

Each torque tool 60 is mounted on a support frame 62 which is connected to the frame 42 via a tensioner drive apparatus 64 which is operable to move the tensioner assembly 58 generally vertically between a lifted position in which the torque tools 60 engage with the connectors 24a, 24b, 26a, 26b and a lowered position in which the torque tools 60 are disengaged from the connectors 24a, 24b, 26a, 26b. In this embodiment, when in the lifted position, the torque tools 60 extend though cut-outs 66 in the support cradle 44 in order to engage with the head of the threaded bolt 25a of each connector 24a, 24b, 26a, 26b. The tensioner assembly 58 is illustrated in Figure 4 in its lowered position, and in Figure 5 in its lifted position.

In this embodiment, the support frame 62 is mounted on the frame 42 by means of the same pair of tracks as the opening arrangement 46, and the tensioner drive apparatus 64 is operable to move the support frame 62 up and down the tracks below the support cradle 44. The tensioner drive apparatus 64 may comprise an electric motor, a hydraulically or pneumatically operated actuator, or any other suitable drive apparatus.

The apparatus 40 advantageously comprises a lifting mechanism 68 which is operable to move between a lowered position and a lifted position in which it lifts a buoyancy aid 10 supported by the support cradle 44 off the support cradle 44.

In this embodiment, the tensioner assembly 58 and tensioner drive apparatus 64 form the lifting mechanism 68. As such, the tensioner drive apparatus 64 is configured such that it continues to move the support frame 62 upwards once the torque tools 60 have engaged with the bolts of the connectors 24a, 24b, 26a, 26b, so that the buoyancy module 10, supported by the torque tools 60, is lifted vertically upwards a short distance off the support cradle 44. The purpose of this will be described in more detail below.

The tensioner assembly 58 may also include additional tools 70 securing the two parts 30a, 30b of the clamp 30 together. In this embodiment, these also comprise torque tools - power operated socket wrenches - which engage with the heads of the two threaded bolts by means of which the two parts 30a, 30b are fastened together. The torque tools are operable to rotate the bolts about their longitudinal axes in either a clockwise or anti-clockwise direction. Two apertures 72 are provided in the support cradle 44 which align with access passages in the lowermost shell portion of the buoyancy aid 10. The additional torque tools 70 are positioned on the support frame 58 such that when the support frame 58 is lifted, the additional torque tools 70 pass through the apertures in the support cradle 44 and along the passages in the lowermost portion of the shell 12 to engage with the clamp fasteners.

The torque tools 60, 70 may comprise a machine operated socket wrenches of the sort commonly used for tightening and loosening the bolts in flanged pipe connections, amongst other applications. Advantageously, the torque tools 60, 70 of are of the sort which are configured to automatically tighten bolts to a predetermined maximum torque.

In the embodiments illustrated in Figures 4 - 6, the tensioner assembly 58 is mounted on the frame 42 below the support cradle 44, and so engages with the connectors on the lowermost shell portion (so the first shell portion 12a in this embodiment) of the buoyancy aid 10. It should be appreciated, however, that the tensioner assembly 58 could equally be mounted above the opener arrangement 46, to engage with the connectors on the uppermost shell portion (in this embodiment the second shell portion 12b) of the buoyancy aid 10, and the sockets provided on the support cradle 44.

Advantageously, the apparatus 40 further comprises a buoyancy aid storage and delivery arrangement 74 which includes a support structure 76 which is capable of supporting at least one buoyancy aid 10, and a conveyor 78. The buoyancy aid storage and delivery arrangement 74 is positioned adjacent to to the frame 42 so that, when the frame 42 is in the loading position as illustrated in Figure 4, the conveyor 78 is operable to move a buoyancy aid 10 from the support structure 76 onto the support cradle 44.

In this embodiment, the support structure 76 is configured to support a plurality of buoyancy aids 10, with one of the said buoyancy aids 10 being in a delivery position. The conveyor 78 is operable, when the frame 42 is in the loading position, to move a buoyancy aid 10 from the delivery position onto the support cradle 44, and to move another buoyancy aid 10 into the delivery position. In this example, the buoyancy aids 10 are arranged in a row in an end-to-end arrangement, ie. with the semi-circular end faces of the shell 12 of one buoyancy aid 10 adjacent to the end faces of an adjacent buoyancy aid 10.

Moreover, the support structure 76 is configured to support first and second rows of buoyancy aids 10, with one buoyancy aid 10 in each row being in a delivery position. The frame drive system is operable to move the frame 42 between a first and second loading position. The buoyancy aid storage and delivery arrangement 74 includes first and second conveyors 78, the first one of which is operable, when the frame 42 is in the first loading position, to move a buoyancy aid 10 in the first row from the delivery position onto the support cradle 44, and to move another buoyancy aid 10 from the first row into the delivery position, and the second one of which is operable, when the frame 42 is in the second loading position, to move a buoyancy aid 10 in the second row from the delivery position onto the support cradle 44, and to move another buoyancy aid 10 in the second row into the delivery position.

Each conveyor 78 may be any suitable standard configuration of conveyor, but in this specific embodiment comprises two mutually parallel belt conveyors each comprising a belt loop 80 supported by a plurality of rotating drums / pulleys 82. One or more of the drums / pulleys is powered by a conventional motor means to rotate and drive the belt loop to move the buoyancy aids 10 towards the support cradle 44. The rest of the drums / pulleys are unpowered idler drums / pulleys which rotate with the movement of the belt loop.

The shell 12 of the buoyancy aid 10 is provided with an orientation feature which engages with a corresponding orientation feature on the buoyancy aid storage and delivery arrangement 74 to ensure that when a buoyancy aid 10 is moved onto the support cradle 44, the two centre faces of each portion 12a, 12b of the shell are generally horizontal. This ensures that when the buoyancy aid 10 is moved onto the support cradle 42, one shell portion 12a, 12b is on top of the other 12a, 12b with the latch part of each lever 50 of the gripper 48 properly aligned with the keeper formation 51 so that the opening arrangement can be operated to lift the top shell portion (in this example the second shell portion 12b) whilst the lowermost shell portion (in this example the first shell portion 12a) remains on the support cradle 42, thus separating the two shell portions 12a, 12b.

In this embodiment, the curved outer face of at least one of the shell portions 12a, 12b of each buoyancy aid 10 has a pair of longitudinal grooves 79 which, when the buoyancy aid 10 is arranged with the two flat centre faces of each portion 12a, 12b of the shell 12 are generally horizontal, each have a generally vertical surface and a generally horizontal surface. The two belt conveyors are spaced such that, when the buoyancy aid is arranged with the shell portion 12a, 12b with the grooves lowermost, the buoyancy aid 10 is supported on the conveyor 78 by the generally horizontal face of each groove 79 resting on top of one of the belt conveyors.

In this embodiment, such a groove 79 is provided in both shell portions 12a, 12b, even though only the groove 79 on the second shell portion 12b acts as an orientation feature. The same applies to the keeper formation 51 (which is only required to be present on the uppermost shell portion). This means that the two shell portions 12a, 12b are identical and interchangeable.

Whilst in this embodiment, the orientation feature comprises two longitudinal grooves, this need not be the case. For example, the same result could be achieved by providing the shell portions 12a, 12b with two longitudinal ridges.

In order to be used to install buoyancy aids 10 on an elongate line such as a cable 84, the apparatus 40 can be installed on the deck 88 of a conventional cable laying vessel 86 as illustrated in Figure 7.

It will be appreciated, of course, that when the apparatus 40 is installed on the deck 88 of a vessel 86, when the vessel 86 is out at sea, the swell of the ocean, or list of the vessel 86 may mean that when the buoyancy aids 10 are correctly oriented in the support frame 76 / support cradle 44 by means of the orientation feature as described above, the cylinder axis of the shell 12 and centre faces of the shell portions 12a, 12b may not be precisely horizontal. They will, however, be generally parallel to the deck 88 of the vessel 86 on which the apparatus is installed, and terms horizontal and vertical used above should therefore be interpreted accordingly as meaning parallel or perpendicular to the surface on which the apparatus 40 is supported.

The cable 84 may comprise electrical leads, and may, for example, be for drawing the electrical power generated by an off-shore wind-turbine. The cable 84 could equally be an umbilical comprising a plurality of electrical leads, a combination of electrical leads and fluid pipes, or a combination of electrical leads and data signal leads.

The cable 84 is drawn from a conventional cable storage carousel or turntable 90 by a conventional cable tensioner and guiding system 92 which pulls the cable from the carousel 90 along a first straight 94 towards the rear of the vessel 86. It then bends the cable 84 through 180° at the rear of the deck 88 into a second straight 96 towards the front of the vessel 86, before bending the cable 84 again through 180° into a third and final straight 98 towards and then off the rear of the vessel 86. The cable 84 is supported on this path by means of a plurality of sets of support rollers 100, and is generally horizontal / parallel to the deck 88 of the vessel 86 at least as it extends along the straights 94, 96, 98.

The apparatus 40 is designed so that it can be installed between the first and third straights 94, 98 so that the buoyancy aids 10 can be mounted on the cable 84 towards the end of the third straight 98 just after the cable 84 leaves the final set of support rollers 100 and before the cable 84 is off-boarded from the rear of the vessel 86, where the cable 84 still extends generally parallel to the deck 88. The apparatus 40 is designed for installation in this position without the need for any modification of the standard cable laying setup.

The apparatus 40 can be operated to install buoyancy aids on the cable 84 as follows.

The support structure 76 of the buoyancy aid storage and delivery arrangement 74 is filled with two rows of buoyancy aids 10, the two shell portions 12a, 12b of all the buoyancy aids 10 being fastened together using the straps 20, 22. The two parts 30a, 30b of the clamp 30 may also be connected, but not necessarily.

As mentioned above, the shell portions 16a, 16b are identical and interchangeable, and the connectors 24a, 24b, 26c, 26d are configured such that the torque tools 60 can be operated to disconnect and connect the connectors 24a, 24b, 26a, 26b irrespective of whether the first shell portion 12a is below the second shell portion 12b, or vice versa. This means that loading of the buoyancy aids 10 onto the conveyor 78 may be simplified, as it doesn't matter which shell portion 12a, 12b is on top when they are loaded.

It will also be appreciated that it would be possible to omit the sockets from the opening arrangement 46 and to use a feature of the shell 12 to engage with and prevent rotation of either the nut 25b or the head of the bolt 25a whilst the torque tools 60 are operational, but in this case, it would be necessary to take care to load the buoyancy aids 10 onto the conveyor 78 the correct way up.

The opener drive apparatus 54 is operated to raise the opening arrangement 46 so that there is sufficient space between the support cradle 44 and the opening arrangement 46 for a buoyancy module 10 to be moved onto the support cradle.

The frame drive apparatus 41 is operated to move the frame 42 into the first loading position. This step could be carried out before, after or during raising the opening arrangement 46.

The first conveyor 78 is then operated to move a buoyancy aid 10 from the first delivery position towards the support cradle 44. As the buoyancy aid 10 comes off the end of the first conveyor 78, it drops into the support cradle 44, engagement of the end plate 44a of the support cradle 42 with the lowermost shell portion 12a ensuring that the buoyancy aid 10 doesn't overshoot and is correctly positioned on the support cradle 44. Operation of the first conveyor 78 is continued until the next buoyancy aid 10 in the first rows moves into the first delivery position, and which point it may be stopped until the support cradle 44 is ready to receive another buoyancy aid 10.

The opener drive system 54 is then operated to lower the opening arrangement 46 towards and into engagement with the uppermost shell portion 12a of the buoyancy aid 10.

The tensioner drive apparatus 64 is operated to raise the tensioner assembly 58 into its lifted position so that the torque tools 60, 70 engage with the heads of the bolt of each connector 24a, 24b, 26a, 26b and the clamp 30. The torque tools 60, 70 are then operated to rotate the bolts whichever direction results in the disengagement of each bolt from its respective bolt-hole. If the buoyancy aids 10 are delivered with the clamp 30 in an unfastened configuration, operation of the additional torque tools to rotate the bolts connecting the two parts 30a, 30b of the clamp 30 would not be necessary. The tensioner drive apparatus 64 is then operated to lower the tensioner assembly 58 into its lowered position. The two shell portions 12a, 12b are now separable.

The gripper 48 is operated to grip the uppermost shell portion of the buoyancy aid 10 by operating each actuator assembly 52 to pivot the levers 50, so that the latch part engages with the keeper formation 51 on the uppermost shell portion (the second shell portion 12b in this embodiment). This step may be carried out before, during, or after operating the tensioner assembly 58 to release the connectors 24a, 24b, 26a, 26b.

The opener drive apparatus 54 is then operated to raise the opening arrangement 46 to lift the uppermost shell portion 12b and separate it from the lowermost shell portion 12a, which remains resting on the support cradle 44.

The frame drive apparatus 41 is then operated to move the frame 42 to the installation position. The apparatus 40 is positioned adjacent to the cable 84 such that when the frame 42 is in the installation position, a portion of the cable 84 lies between the first and second shell portions 12a, 12b, and generally aligned with the centres of the longitudinal recesses 16 in each shell portion 12a, 12b.

The lifting mechanism 68 is then operated to lift the lowermost shell portion (in this example the first shell portion12a) into engagement with the cable 84. In this embodiment, this entails operating the tensioner drive apparatus 64 to move the tensioner assembly 58 into its lifted position in which the torque tools 60, 70 engage with their respective bolts, and then to continue operation of the tensioner drive apparatus 64 to lift the lowermost shell portion off the support cradle 44 into contact with the cable 84.

The opener drive apparatus 54 is also operated to lower the uppermost shell portion (in this embodiment, the second shell portion12b) to bring it into engagement with the lowermost shell portion. This may be done before, after or whilst operating the lifting mechanism 68.

The cable 84 is then trapped between the two shell portions 12a, 12b, with the two clamp parts 30a, 30b on either side of the cable 84.

Advantageously, the operation of the opener drive apparatus 54 and tensioner drive apparatus 64 is controlled so that the two shell portions 12a, 12b come into engagement with the cable 84 without either pushing the cable 84 either upwards or downwards, so that the cable 84 remains parallel to the deck 88.

The torque tools 60, 70 are then operated to rotate the bolts whichever direction results in the engagement of the thread of each bolt with the thread in its respective bolt-hole. Once the bolts are tightened to the required torque level, and the tensioner drive apparatus 64 is operated to lower the tensioner assembly 58 into its lowered position. The two shell portions 12a, 12b are now secured together using the straps 20, 22, and are no longer separable, and sliding movement of the buoyancy aid 10 along the cable is substantially prevented by the clamping of claim 30 onto the cable 84.

The gripper 48 is then operated to release the uppermost shell portion (in this embodiment the second shell portion 12b) by operating the actuator assemblies to pivot the levers 50 so that the latch parts move out of engagement with the keeper formation on the buoyancy aid. The opener drive apparatus 54 can then be operated to raise the opening arrangement 46, and the frame drive apparatus 41 to move the frame 42 from the installation position.

The cable tensioner and guiding system 92 may then be operated to eject the portion of the cable 84 on which the buoyancy aid 10 is mounted off the rear of the vessel 86, and move a new portion of cable 84 into position for receiving a buoyancy module 10. The installation process described above may then be repeated.

The frame drive apparatus 41 could be operated to move the frame 42 to the second loading position so as to receive the next buoyancy aid from the second row of buoyancy aids 10, and from then on, alternate loading positions. More preferably, however, the frame drive apparatus 41 is operated to return to the first loading position each time until the first row of buoyancy modules 10 is empty, at which point it moves to the second loading position to start accepting buoyancy aids 10 from the second row. This would enable the first row of buoyancy aids to be restocked whilst the installation process continues using the buoyancy aids 10 from the second row. Then, when the second row is empty, the frame 42 can return to the first loading position to resume installation from the first row, and so on.

It will be appreciated that by virtue of this invention, the process of installing a buoyancy aid 10 on a cable can be carried out with minimal manual intervention, which may improve the safety of the process. Manual handling of buoyancy aids 10 is limited to their movement from storage onto the support frame 76 of the buoyancy aid storage and delivery system 74.

Advantageously, the operation of the drive system 41, 54, 64, the torque tools 60, 70, conveyors 78 and cable tensioner and guiding system 92 are controlled automatically, and in a coordinated manner using a central controller. By the coordinated operation of all these machines, and the absence of any manual intervention, the time taken for the installation of each buoyancy aid 10 on the cable 84 can be minimised. It may, for example, be decreased from the around 15 minutes per buoyancy aid 10 achieved using existing standard systems, to around 1 -2 minutes per buoyancy aid 10.

Moreover, as the apparatus 40 can be installed on a standard cable laying vessel 86, it may be possible to avoid hiring offshore construction vessels and to utilize cheaper vessels. All manual work is removed from critical line as the system is completely hands free, and therefore the safety of the installation process may be improved.

The invention is not limited by the embodiments described above; reference should be had to the appended claims.

For example, it should be appreciated that the support cradle 44 could be movable relative to the frame 42, and the drive system could be provided with a support cradle drive apparatus which is operable to lower the support cradle 44 relative to the frame 42. In this way, the separation of the two shell portions 12a, 12b of the buoyancy aid 10 could be achieved by lowering the support cradle 44 whilst the uppermost shell portion 12b is held above the line 84 by the gripper 48, instead of, or in addition to raising the opening arrangement 46. Similarly, closing of the two shell portions 12a, 12b around the line 84 could be achieved by raising the support cradle instead of, on in addition to lowering the opening arrangement 46. In this case, the provision of the lifting mechanism to lift the lowermost shell portion off the support cradle 44 may not be required.

## Claims

1. An apparatus (40) for mounting a buoyancy aid (10) on an elongate line (84), the buoyancy aid (10) having a first portion (12b) and a second portion (12a) which are separable to enable the buoyancy aid (10) to be mounted on the elongate line (84), the apparatus (40) comprising a movable frame (42) on which is mounted a support cradle (44) and an opening arrangement (46), the opening arrangement (46) having a gripper (48) which is operable to grip whichever of the first or second portions (12a, 12b) of a buoyancy aid (10) placed on the support cradle (44) is uppermost, the apparatus (40) further comprising a drive system which is operable to move the frame (42) between a loading position in which the buoyancy aid (10) may be placed on the support cradle (44) and an installation position, and also to move the opening arrangement (46) and / or the support cradle (44) relative to the frame (42) in such a way that when the gripper (48) is gripping whichever of the first or second portions (12a, 12b) of the buoyancy aid (10) placed on the support cradle (44) is uppermost, the first portion (12b) separates from the second portion (12a).

2. An apparatus (40) according to claim 1 wherein the opening arrangement (46) is movable relative to the frame (42), and the drive system is operable to lift the opening arrangement (46) relative to the support cradle (44) so that when the gripper (48) is gripping whichever of the first or second portions (12a, 12b) of the buoyancy aid (10) placed on the support cradle (44) is uppermost, this uppermost portion of the buoyancy aid (10) is lifted off the other portion.

3. An apparatus (40) according to claim 1 or 2 further including a tensioner (58) which is operable to actuate a locking device to secure the first portion (12b) of a buoyancy aid (10) on the support cradle (44) to the second portion (12a), so that the first and second portions (12a, 12b) can no longer be separated.

4. An apparatus (40) according to claim 3 including a plurality of tensioners which are operable to simultaneously actuate a plurality of locking devices to secure the first portion (12b) of the buoyancy aid (10) on the support cradle (44) to the second portion (12a), so that the first and second portions (12a, 12b) can no longer be separated.

5. An apparatus (40) according to claim 3 or 4 wherein the or each tensioner (58) is operable to actuate the locking device to release the first portion (12b) of the buoyancy aid (10) on the support cradle (44) from the second portion (12a) so that the first portion (12b) can be separated from the second portion (12a) by the opening arrangement (46).

6. An apparatus (40) according to any one of claims 3 to 5 wherein the or each tensioner (58) comprises a torque tool (60).

7. An apparatus (40) according to any preceding claim further comprising a lifting mechanism (68) which is operable to move between a lowered position and a lifted position in which it lifts the buoyancy aid (10) supported by the support cradle (44) off the support cradle (44).

8. An apparatus (40) according to claim 7 where dependent on any one of claims 3 to 6 wherein the or each tensioner (58) is mounted on the lifting mechanism (68).

9. An apparatus (40) according to any preceding claim further comprising a buoyancy aid storage and delivery arrangement (74) which includes a support structure (76) which is capable of supporting at least one buoyancy aid (10), and a conveyor (78) which, when the frame (42) is in the loading position, is operable to move the buoyancy aid (10) from the support structure (76) onto the support cradle (44).

10. An apparatus (40) according to claim 9 wherein the support structure (76) is configured to support a plurality of buoyancy aids (10), with one of the said buoyancy aids (10) being in a delivery position, and the conveyor (78) is operable, when the frame (42) is in the loading position, to move the buoyancy aid (10) from the delivery position onto the support cradle (44), and to move another buoyancy aid (10) into the delivery position.

11. An apparatus (40) according to claim 10 wherein the support structure (76) is configured to hold the buoyancy aids (10) in a row in an end-to-end arrangement.

12. An apparatus (40) according to claim 10 or 11 wherein the support structure (76) is configured to support first and second rows of buoyancy aids (10), with one buoyancy aid (10) in each row being in a delivery position, the drive system being operable to move the frame (42) between a first and second loading position, and the buoyancy aid storage and delivery arrangement (74) including first and second conveyors (78) the first one of which is operable, when the frame (42) is in the first loading position, to move a buoyancy aid (10) in the first row from the delivery position onto the support cradle (44), and to move another buoyancy aid (10) from the first row into the delivery position, and the second one of which is operable, when the frame (42) is in the second loading position, to move a buoyancy aid (10) in the second row from the delivery position onto the support cradle (44), and to move another buoyancy aid (10) in the second row into the delivery position.

13. A method of installing a buoyancy aid (10) on an elongate line (84) using an apparatus (40) according to any preceding claim, the buoyancy aid (10) having a first portion and second portion (12a, 12b) which are separable to enable the buoyancy aid (10) to be mounted on the elongate line (84), wherein the method includes the steps of:
a) with the frame (42) in the loading position, loading a buoyancy aid (10) onto the support cradle (44),
b) operating the gripper (48) to grip whichever of the first or second portions (12a, 12b) of the buoyancy aid (10) is uppermost,
c) operating the drive system to move the support cradle (44) and / or the opening arrangement (46) relative to the frame (42), to separate the first portion and second portion (12a, 12b) of the buoyancy aid (10),
d) operating the drive system to move the frame (42) to the installation position,
e) operating the drive system to move the support cradle (44) or opening arrangement (46) relative to the frame (42) to bring the first portion of the buoyancy aid (10) back into engagement with the second portion.

14. A method according to claim 13 wherein step c comprises moving the opening arrangement (46) relative to the frame (42) to lift the opening arrangement (46) relative to the support cradle (44) so that whichever of the first or second portions (12a, 12b) of the buoyancy aid (10) is uppermost is lifted off whichever of the first or second portions (12a, 12b) of the buoyancy aid (10) is lowermost.

15. A method according to claim 13 or 14 wherein step b may comprise, prior to operating the gripper (48), operating the drive system to bring the opening arrangement (46) towards whichever of the first or second portions (12a, 12b) of the buoyancy aid (10) is uppermost.

## Patentansprüche

1. Vorrichtung (40) zum Montieren eines Auftriebshilfsmittels (10) auf einer länglichen Leitung (84), wobei das Auftriebshilfsmittel (10) einen ersten Abschnitt (12b) und einen zweiten Abschnitt (12a) aufweist, die trennbar sind, um es dem Auftriebshilfsmittel (10) zu ermöglichen, auf der länglichen Leitung (84) montiert zu werden, wobei die Vorrichtung (40) einen bewegbaren Rahmen (42) umfasst, auf dem eine Stützhalterung (44) und eine Öffnungsanordnung (46) montiert sind, wobei die Öffnungsanordnung (46) einen Greifer (48) aufweist, der dazu betreibbar ist, den einen des ersten oder des zweiten Abschnitts (12a, 12b) eines Auftriebshilfsmittels (10), das auf der Stützhalterung (44) platziert ist, zu greifen, der sich ganz oben befindet, wobei die Vorrichtung (40) ferner ein Antriebssystem umfasst, das dazu betreibbar ist, den Rahmen (42) zwischen einer Ladeposition, in der das Auftriebshilfsmittel (10) auf der Stützhalterung (44) platziert werden kann, und einer Installationsposition zu bewegen und ebenfalls die Öffnungsanordnung (46) und/oder die Stützhalterung (44) in Bezug auf den Rahmen (42) derart zu bewegen, dass, wenn der Greifer (48) den einen des ersten oder des zweiten Abschnitts (12a, 12b) des Auftriebshilfsmittels (10), das auf der Stützhalterung (44) platziert ist, der sich ganz oben befindet, greift, sich der erste Abschnitt (12b) von dem zweiten Abschnitt (12a) trennt.

2. Vorrichtung (40) nach Anspruch 1, wobei die Öffnungsanordnung (46) in Bezug auf den Rahmen (42) bewegbar ist und das Antriebssystem dazu betreibbar ist, die Öffnungsanordnung (46) in Bezug auf die Stützhalterung (44) anzuheben, sodass, wenn der Greifer (48) den einen des ersten oder des zweiten Abschnitts (12a, 12b) des Auftriebshilfsmittels (10), das auf der Stützhalterung (44) platziert ist, der sich ganz oben befindet, greift, dieser oberste Abschnitt des Hilfsmittels (10) von dem anderen Abschnitt abgehoben wird.

3. Vorrichtung (40) nach Anspruch 1 oder 2, ferner beinhaltend einen Spanner (58), der dazu betreibbar ist, eine Verriegelungseinrichtung zu betätigen, um den ersten Abschnitt (12b) eines Auftriebshilfsmittels (10) auf der Stützhalterung (44) mit dem zweiten Abschnitt (12a) zu sichern, sodass der erste und der zweite Abschnitt (12a, 12b) nicht länger getrennt werden können.

4. Vorrichtung (40) nach Anspruch 3, beinhaltend eine Vielzahl von Spannern, die dazu betreibbar ist, eine Vielzahl von Verriegelungseinrichtungen gleichzeitig zu betätigen, um den ersten Abschnitt (12b) des Auftriebshilfsmittels (10) auf der Stützhalterung (44) mit dem zweiten Abschnitt (12a) zu sichern, sodass der erste und der zweite Abschnitt (12a, 12b) nicht länger getrennt werden können.

5. Vorrichtung (40) nach Anspruch 3 oder 4, wobei der oder jeder Spanner (58) dazu betreibbar ist, die Verriegelungseinrichtung zu betätigen, um den ersten Abschnitt (12b) des Auftriebshilfsmittels (10) auf der Stützhalterung (44) von dem zweiten Abschnitt (12a) zu lösen, sodass der erste Abschnitt (12b) durch die Öffnungsanordnung (46) von dem zweiten Abschnitt (12a) getrennt werden kann.

6. Vorrichtung (40) nach einem der Ansprüche 3 bis 5, wobei der oder jeder Spanner (58) ein Drehmomentwerkzeug (60) umfasst.

7. Vorrichtung (40) nach einem der vorhergehenden Ansprüche, ferner umfassend einen Hebemechanismus (68), der dazu betreibbar ist, sich zwischen einer abgesenkten Position und einer angehobenen Position, in der er das Auftriebshilfsmittel (10), das durch die Stützhalterung (44) gestützt wird, von der Stützhalterung (44) abhebt, zu bewegen.

8. Vorrichtung (40) nach Anspruch 7 bei Anhängigkeit von einem der Ansprüche 3 bis 6, wobei der oder jeder Spanner (58) auf dem Hebemechanismus (68) montiert ist.

9. Vorrichtung (40) nach einem der vorhergehenden Ansprüche, ferner umfassend eine Auftriebshilfsmittel-Speicher- und - Lieferanordnung (74), die eine Stützstruktur (76), die dazu fähig ist, mindestens ein Auftriebshilfsmittel (10) zu stützen, und ein Beförderungsgerät (78) beinhaltet, das, wenn sich der Rahmen (42) in der Ladeposition befindet, dazu betreibbar ist, das Auftriebshilfsmittel (10) von der Stützstruktur (76) auf die Stützhalterung (44) zu bewegen.

10. Vorrichtung (40) nach Anspruch 9, wobei die Stützstruktur (76) dazu konfiguriert ist, eine Vielzahl von Auftriebshilfsmitteln (10) zu stützen, wobei sich eines der Auftriebshilfsmittel (10) in einer Lieferposition befindet und das Beförderungsgerät (78) dazu betreibbar ist, wenn sich der Rahmen (42) in der Ladeposition befindet, das Auftriebshilfsmittel (10) von der Lieferposition auf die Stützhalterung (44) zu bewegen und ein anderes Auftriebshilfsmittel (10) in die Lieferposition zu bewegen.

11. Vorrichtung (40) nach Anspruch 10, wobei die Stützstruktur (76) dazu konfiguriert ist, die Auftriebshilfsmittel (10) in einer Ende-zu-Ende-Anordnung in einer Reihe zu halten.

12. Vorrichtung (40) nach Anspruch 10 oder 11, wobei die Stützstruktur (76) dazu konfiguriert ist, eine erste und eine zweite Reihe von Auftriebshilfsmitteln (10) zu stützen, wobei sich ein Auftriebshilfsmittel (10) in jeder Reihe in einer Lieferposition befindet, wobei das Antriebssystem dazu betreibbar ist, den Rahmen (42) zwischen einer ersten und einer zweiten Ladeposition zu bewegen, und wobei die Auftriebshilfsmittel-Speicher- und -Lieferanordnung (74) ein erstes und ein zweites Beförderungsgerät (78) beinhaltet, von denen das erste dazu betreibbar ist, wenn sich der Rahmen (42) in der ersten Ladeposition befindet, ein Auftriebshilfsmittel (10) in der ersten Reihe von der Lieferposition auf die Stützhalterung (44) zu bewegen und ein anderes Auftriebshilfsmittel (10) von der ersten Reihe in die Lieferposition zu bewegen, und von denen das zweite dazu betreibbar ist, wenn sich der Rahmen (42) in der zweiten Ladeposition befindet, ein Auftriebshilfsmittel (10) in der zweiten Reihe von der Lieferposition auf die Stützhalterung (44) zu bewegen und ein anderes Auftriebshilfsmittel (10) in der zweiten Reihe in die Lieferposition zu bewegen.

13. Verfahren zum Installieren eines Auftriebshilfsmittels (10) auf einer länglichen Leitung (84) unter Verwendung einer Vorrichtung (40) nach einem der vorhergehenden Ansprüche, wobei das Auftriebshilfsmittel (10) einen ersten Abschnitt und einen zweiten Abschnitt (12a, 12b) aufweist, die trennbar sind, um es dem Auftriebshilfsmittel (10) zu ermöglichen, auf der länglichen Leitung (84) montiert zu werden, wobei das Verfahren die folgenden Schritte beinhaltet:
a) mit dem Rahmen (42) in der Ladeposition, Laden eines Auftriebshilfsmittels (10) auf die Stützhalterung (44),
b) Betreiben des Greifers (48), um den einen des ersten oder des zweiten Abschnitts (12a, 12b) des Auftriebshilfsmittels (10) zu greifen, der sich ganz oben befindet,
c) Betreiben des Antriebssystems, um die Stützhalterung (44) und/oder die Öffnungsanordnung (46) in Bezug auf den Rahmen (42) zu bewegen, um den ersten Abschnitt und den zweiten Abschnitt (12a, 12b) des Auftriebshilfsmittels (10) zu trennen,
d) Betreiben des Antriebssystems, um den Rahmen (42) in die Installationsposition zu bewegen,
e) Betreiben des Antriebssystems, um die Stützhalterung (44) oder die Öffnungsanordnung (46) in Bezug auf den Rahmen (42) zu bewegen, um den ersten Abschnitt des Auftriebshilfsmittels (10) wieder in Eingriff mit dem zweiten Abschnitt zu bringen.

14. Verfahren nach Anspruch 13, wobei Schritt c Bewegen der Öffnungsanordnung (46) in Bezug auf den Rahmen (42) umfasst, um die Öffnungsanordnung (46) in Bezug auf die Stützhalterung (44) anzuheben, sodass der eine des ersten oder des zweiten Abschnitts (12a, 12b) des Auftriebshilfsmittels (10), der sich ganz oben befindet, von dem einen des ersten oder des zweiten Abschnitts (12a, 12b) des Auftriebshilfsmittels (10) abgehoben wird, der sich ganz unten befindet.

15. Verfahren nach Anspruch 13 oder 14, wobei Schritt b vor dem Betreiben des Greifers (48) Betreiben des Antriebssystems umfassen kann, um die Öffnungsanordnung (46) in Richtung von dem einen des ersten oder des zweiten Abschnitts (12a, 12b) des Auftriebshilfsmittels (10) zu bringen, der sich ganz oben befindet.

## Revendications

1. Appareil (40) pour fixer une aide à la flottabilité (10) sur une ligne allongée (84), l'aide à la flottabilité (10) ayant une première partie (12b) et une deuxième partie (12a) séparables permettant le montage de l'aide à la flottabilité (10) sur la ligne allongée (84), l'appareil (40) comprenant un cadre mobile (42) sur lequel est monté un berceau de support (44) et un agencement d'ouverture (46), l'agencement d'ouverture (46) ayant une pince (48) pouvant fonctionner pour saisir l'une quelconque des première ou deuxième parties (12a, 12b) de l'aide à la flottabilité (10) placée sur le berceau de support (44) qui est la plus haute, l'appareil (40) comprenant en outre un système d'entraînement pouvant fonctionner pour déplacer le cadre (42) entre une position de chargement dans laquelle l'aide à la flottabilité (10) peut être placée sur le berceau de support (44) et une position d'installation, et aussi pour déplacer l'agencement d'ouverture (46) et/ou le berceau de support (44) par rapport au cadre (42) de telle sorte que lorsque la pince (48) agrippe l'une quelconque des première ou deuxième parties (12a, 12b) de l'aide à la flottabilité (10) placée sur le berceau de support (44) qui est la plus haute, la première partie (12b) se sépare de la deuxième partie (12a).

2. Appareil (40) selon la revendication 1 dans lequel l'agencement d'ouverture (46) est mobile par rapport au cadre (42), et le système d'entraînement est en mesure de soulever l'agencement d'ouverture (46) par rapport au berceau de support (44) de sorte que lorsque la pince (48) saisit la partie la plus haute de l'aide à la flottabilité (10) placée sur le berceau de support (44), la partie la plus haute de l'aide à la flottabilité (10) est soulevée de l'autre partie.

3. Appareil (40) selon la revendication 1 ou 2 comprenant en outre un tendeur (58) qui peut actionner un dispositif de verrouillage pour fixer la première partie (12b) d'une aide à la flottabilité (10) sur le berceau de support (44) à la deuxième partie (12a), de sorte que les première et deuxième parties (12a, 12b) ne peuvent plus être séparées.

4. Appareil (40) selon la revendication 3 comprenant une pluralité de tendeurs qui peuvent fonctionner pour actionner simultanément une pluralité de dispositifs de verrouillage afin de fixer la première partie (12b) de l'aide à la flottabilité (10) sur le berceau de support (44) à la deuxième partie (12a), de sorte que les première et deuxième parties (12a, 12b) ne peuvent plus être séparées.

5. Appareil (40) selon la revendication 3 ou 4 dans lequel le ou chaque tendeur (58) peut fonctionner pour actionner le dispositif de verrouillage afin de libérer la première partie (12b) de l'aide à la flottabilité (10) sur le berceau de support (44) de la deuxième partie (12a) de sorte que la première partie (12b) puisse être séparée de la deuxième partie (12a) par l'agencement d'ouverture (46).

6. Appareil (40) selon l'une quelconque des revendications 3 à 5 dans lequel le ou chaque tendeur (58) comprend un outil de couple (60).

7. Appareil (40) selon l'une quelconque des revendications précédentes comprenant en outre un mécanisme de levage (68) qui peut fonctionner pour se déplacer entre une position abaissée et une position levée dans laquelle il soulève l'aide à la flottabilité (10) supportée par le berceau de support (44) hors du berceau de support (44).

8. Appareil (40) selon la revendication 7, dépendant de l'une quelconque des revendications 3 à 6, dans lequel le ou chaque tendeur (58) est monté sur le mécanisme de levage (68).

9. Appareil (40) selon l'une quelconque des revendications précédentes comprenant en outre un dispositif de stockage et de livraison d'aide à la flottabilité (74) qui comprend une structure de support (76) capable de supporter au moins une aide à la flottabilité (10), et un convoyeur (78) qui, lorsque le cadre (42) est en position de chargement, est fonctionnel pour déplacer l'aide à la flottabilité (10) de la structure de support (76) vers le berceau de support (44).

10. Appareil (40) selon la revendication 9 dans lequel la structure de support (76) est configurée pour supporter une pluralité d'aides à la flottabilité (10), l'une desdites aides à la flottabilité (10) étant en position de livraison, et le convoyeur (78) peut fonctionner, lorsque le cadre (42) est en position de chargement, pour déplacer l'aide à la flottabilité (10) de la position de livraison sur le berceau de support (44), et pour déplacer une autre aide à la flottabilité (10) en position de livraison.

11. Appareil (40) selon la revendication 10 dans lequel la structure de support (76) est configurée pour maintenir les aides à la flottabilité (10) en rangée dans un agencement bout à bout.

12. Appareil (40) selon la revendication 10 ou 11, dans lequel la structure de support (76) est configurée pour supporter une première et une deuxième rangée d'aides à la flottabilité (10), une aide à la flottabilité (10) de chaque rangée étant en position de livraison, le système d'entraînement permettant de déplacer le cadre (42) entre une première et une deuxième position de chargement, et le dispositif de stockage et de livraison d'aides à la flottabilité (74) comprenant des premier et deuxième convoyeurs (78), le premier convoyeur, lorsque le cadre (42) est en première position de chargement, déplace une aide à la flottabilité (10) dans la première rangée de la position de livraison vers le berceau de support (44), et déplace une autre aide à la flottabilité (10) de la première rangée vers la position de livraison, et le deuxième convoyeur, lorsque le cadre (42) est en deuxième position de chargement, déplace une aide à la flottabilité (10) de la deuxième rangée de la position de livraison vers le berceau de support (44), et déplace une autre aide à la flottabilité (10) à la deuxième rangée, en position de livraison.

13. Procédé d'installation d'une aide à la flottabilité (10) sur une ligne allongée (84) à l'aide d'un appareil (40) selon l'une quelconque des revendications précédentes, l'aide à la flottabilité (10) ayant une première partie et une deuxième partie (12a, 12b) séparables permettant le montage de l'aide à la flottabilité (10) sur la ligne allongée (84), le procédé comprenant les étapes consistant à :
a) avec le cadre (42) en position de chargement, charger une aide à la flottabilité (10) sur le berceau de support (44),
b) faire fonctionner la pince (48) pour saisir laquelle des première ou deuxième parties (12a, 12b) de l'aide à la flottabilité (10), qui est la plus haute,
c) faire fonctionner le système d'entraînement pour déplacer le berceau de support (44) et/ou l'agencement d'ouverture (46) par rapport au cadre (42), afin de séparer la première et la deuxième partie (12a, 12b) de l'aide à la flottabilité (10),
d) faire fonctionner le système d'entraînement pour déplacer le cadre (42) jusqu'à la position d'installation,
e) faire fonctionner le système d'entraînement pour déplacer le berceau de support (44) ou l'agencement d'ouverture (46) par rapport au cadre (42) afin de ramener la première partie de l'aide à la flottabilité (10) en contact avec la deuxième partie.

14. Procédé selon la revendication 13 dans lequel l'étape c comprend le déplacement de l'agencement d'ouverture (46) par rapport au cadre (42) pour soulever l'agencement d'ouverture (46) par rapport au berceau de support (44) de sorte que l'une quelconque des première ou deuxième parties (12a, 12b) de l'aide à la flottabilité (10) qui est la plus haute soit soulevée de l'une quelconque des première ou deuxième parties (12a, 12b) de l'aide à la flottabilité (10).

15. Procédé selon la revendication 13 ou 14 dans lequel l'étape b peut comprendre, avant de faire fonctionner la pince (48), le fonctionnement du système d'entraînement pour amener l'agencement d'ouverture (46) vers l'une quelconque des première ou deuxième parties (12a, 12b) qui est la plus haute de l'aide à la flottabilité (10).
